# EUROPÄISCHE PATENTSCHRIFT

(11) **EP 0 430 228 B1**
(45) Veröffentlichungstag und Bekanntmachung des Hinweises auf die Patenterteilung: **09.08.1995**
(21) Anmeldenummer: 90122810.6
(22) Anmeldetag: 29.11.1990
(51) Int. Cl.: B23B 39/16, B27C 3/04, B23Q 16/00

(54) **Bohrwerk**
Drilling machine
Machine à percer

(30) Priorität: 30.11.1989 DE 8914125 U
(43) Veröffentlichungstag der Anmeldung: 05.06.1991
(73) Patentinhaber: PRIESS, HORSTMANN & CO. MASCHINENBAU GMBH & CO. KG, 32479 Hille (DE)
(72) Erfinder: Priess, Wilfried, W-4955 Hille-Unterlübbe (DE); Reimler, Marold, W-4970 Bad Oeynhausen 9 (DE)
(74) Vertreter: Hoefer, Theodor, Dipl.-Ing.

(56) Entgegenhaltungen:
- DE-A- 2 456 472
- DE-A- 3 531 988
- DE-U- 8 536 432
- FR-A- 2 191 981

## Beschreibung

Die Erfindung bezieht sich auf ein Bohrwerk gemäß dem Oberbegriff des Anspruchs 1.

Aus DE-A-3 531 988 ist es vorbekannt, bei einem derartigen Bohrwerk den Zentrierstift in einem Schwenkgehäuse (Schwenkkörper) zu lagern, das in der Bohrerebene um eine rechtwinklig verlaufende waagerechte Schwenkachse gelagert ist. Dabei ist der Schwenkkörper mit Zentrierstift gesondert von dem Bohrwerk am Bohrwerksständer gelagert, so daß gewisse Ungenauigkeiten der Arretierung durch unterschiedliche Handhabung der Bedienungsperson entstehen können.

Die DE-A-24 56 472 zeigt eine Vorrichtung zur Herstellung einer Reihe von Bohrungen, bei welcher an einem Arbeitstisch längsverschiebbar ein Werkzeugschlitten gelagert ist. An dem Werkzeugschlitten sind eine erste Verriegelungseinrichtung und eine zweite Verriegelungseinrichtung angebracht, welche mit Indexbohrungen der Grundplatte des Gestells zusammenwirken. Die beiden Verriegelungseinrichtungen dienen dazu, den Werkzeugschlitten in seiner jeweiligen Arbeitsposition relativ zu dem Arbeitstisch zu positionieren. Diese Positionierung ist unabhängig von dem Werkstück, so daß Versatzfehler auftreten können, wenn das Werkstück nicht exakt positioniert ist. Weiterhin ist es nicht möglich, geänderte Anordnungen von Bohrungen vorzusehen, ohne die gesamte Vorrichtung umzubauen, da die Indexbohrungen nicht am Werkstück sondern an der Grundplatte des Arbeitstisches ausgebildet sind. Bedingt durch die Größe des Werkzeugschlittens ist weiterhin nicht sichergestellt, daß Verkantungen oder Winkelversetzungen des Werkzeugschlittens so kompensiert werden können, daß eine gleichbleibende Werkstückqualität gewährleistet ist.

Der Erfindung liegt die Aufgabe zugrunde, ein Bohrwerk der eingangs genannten Art zu schaffen, welches eine exakte Positionierung des Werkstücks relativ zu den Bohrern gewährleistet und bei welchem eine genaue Lage der taktweise hintereinander einzubringenden Bohrungen sichergestellt ist.

Erfindungsgemäß wird die Aufgabe durch die Merkmale des Hauptanspruchs gelöst. Die Unteransprüche zeigen weitere vorteilhafte Ausgestaltungen der Erfindung.

Die Arretiereinrichtung ist somit mit einer Vorzentriereinrichtung und einer nachfolgenden Zentriereinrichtung in eine starre, mit den Bohrern verbundene Baueinheit eingebaut.

Diese starre Baueinheit, bei der die Arretiereinrichtung in einem Bohrgetriebeblock integriert ist, zeigt keine nachteiligen Toleranzen zwischen der Arretiereinrichtung und den damit zusammenwirkenden, in einer Reihe damit stehenden Bohrern.

Dabei ist es bevorzugt, einen den Zentrierstift haltenden Schwenkkörper der Vorzentriereinrichtung in einem in seiner Längsrichtung bewegbaren Haltestab zu lagern, so daß dadurch ein größerer Verschiebeweg erreicht werden kann. Hierzu kann der Haltestab mit einer Führungsnut mit einfassendem Führungsstift o. dgl. ausgestattet sein.

Dabei ist es weiterhin bevorzugt, in dem verschiebbaren Haltestab eine die senkrechte Stellung des Schwenkkörpers festlegende Stellschraube (Anschlag) vorzusehen.

Zum endgültigen Zentrieren kann in bevorzugter Weise die den Zentrierstift fest aufnehmende Haltestange in einer Druckluftkammer des Bohrgetriebeblocks verschiebbar, bzw. kolbenartig verschiebbar, gelagert sein.

Da hierbei mittels der Druckkammer die Haltestange nur in einer Richtung sich verschiebt, ist es bevorzugt, zur Bewegung der Haltestange diese mit einer Rückholfeder auszustatten.

Da bei einer bevorzugten weiteren Ausführungsform der Bohrgetriebeblock in der Höhe verstellbar im Maschinengestell gelagert ist, so läßt sich damit auch die Arretiereinrichtung insgesamt in der Höhe verstellen.

Ein Ausführungsbeispiel der Erfindung ist in der Zeichnung dargestellt und wird im folgenden näher beschrieben. Es zeigen:

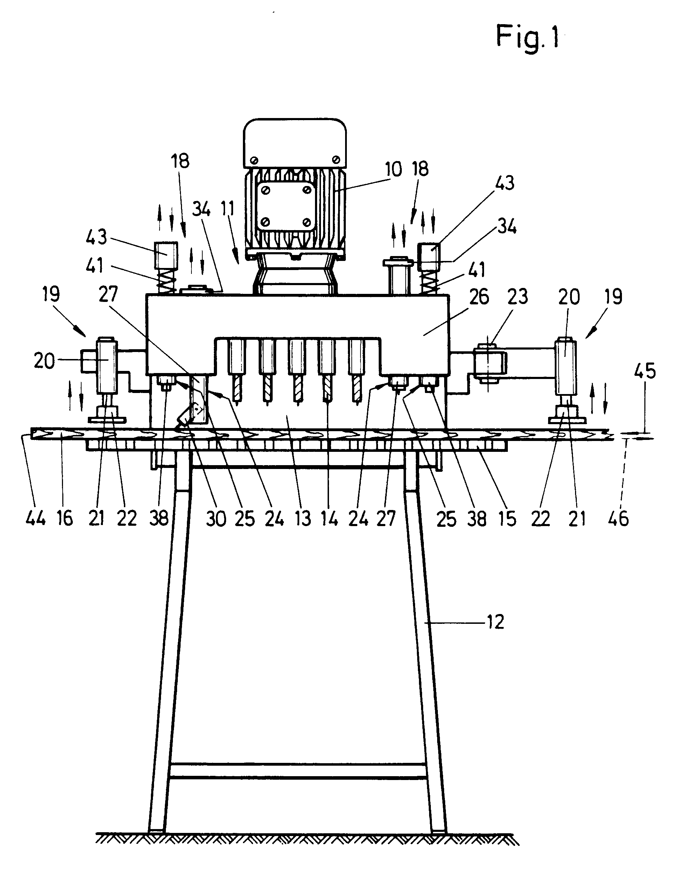

- Fig. 1: eine Vorderansicht eines Bohrwerkes;

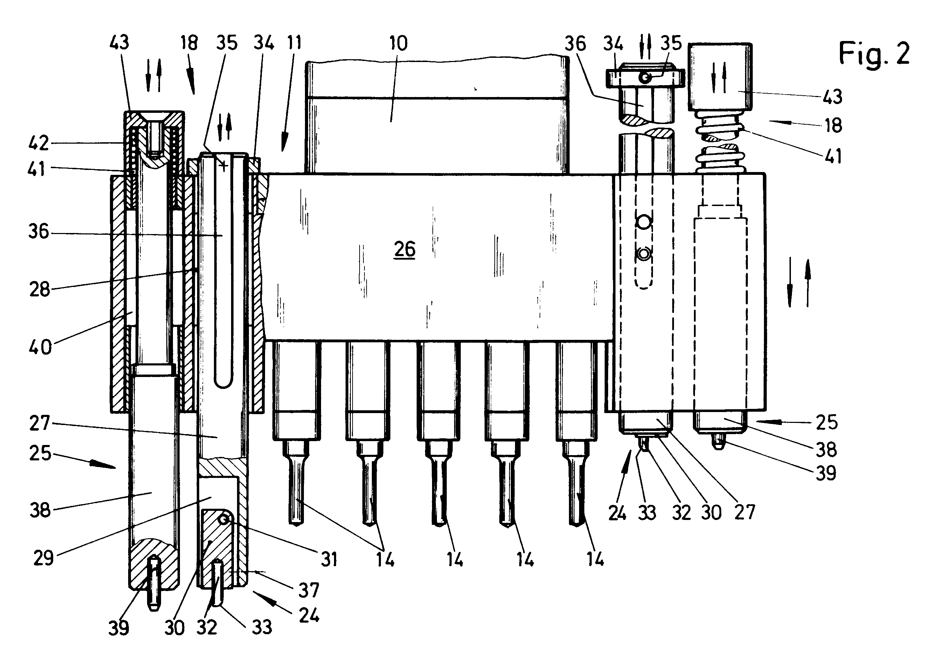

- Fig. 2: eine Vorderansicht eines im Bereich einer Arretiereinrichtung geschnitten dargestellten Bohrgetriebes;

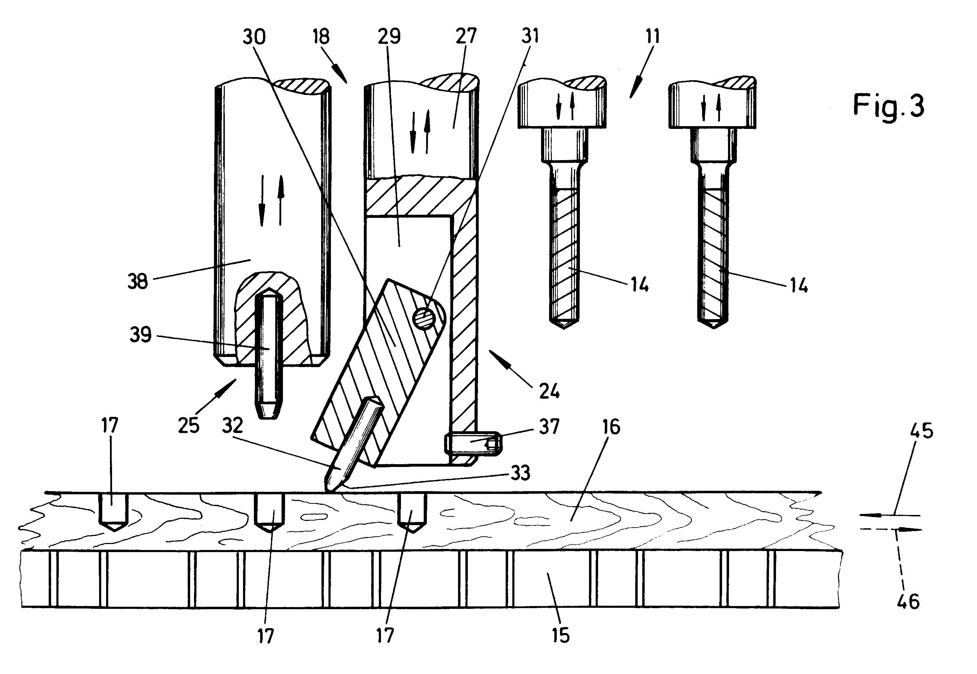

- Fig. 3: eine Ansicht des Bereichs eines Schwenkkörpers (der Arretiervorrichtung) in dessen ausgeschwenkter Stellung, teilweise geschnitten;

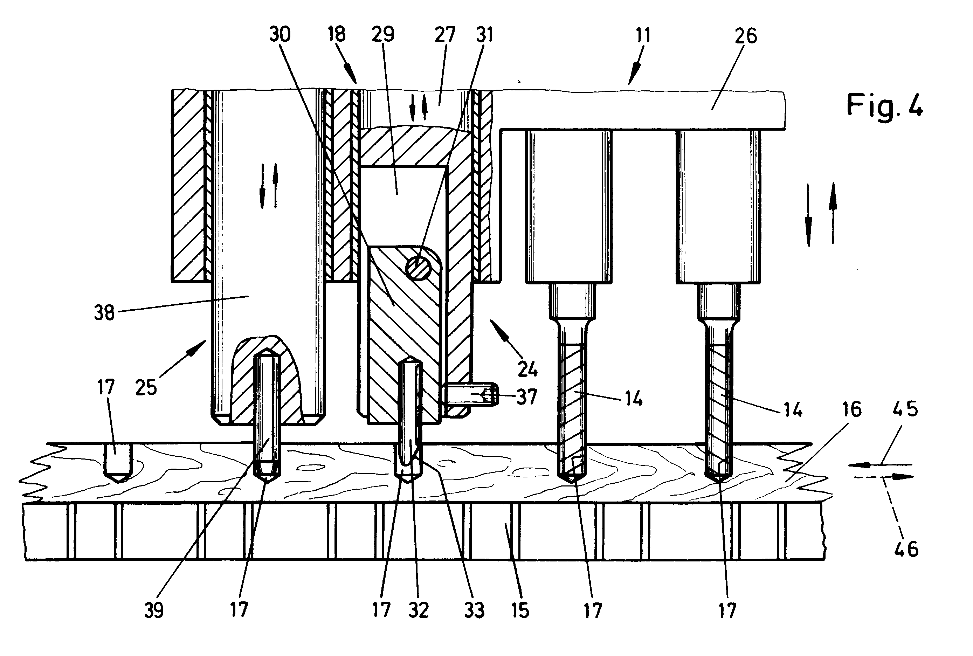

- Fig. 4: eine Ausschnittsvergrößerung der mit einem Werkstück sich im Eingriff befindlichen Arretiereinrichtung.

Ein Bohrwerk hat einen Antriebsmotor (10), der unmittelbar mit seiner Antriebswelle senkrecht nach unten zeigt und auf dem Bohrgetriebe (11) aufgeflanscht ist. Antriebsmotor (10) und Bohrgetriebe (11) sind höhenverschiebbar (nicht dargestellt) oberhalb eines Maschinengestells (12) und eines an diesem befestigten Bohrwerksträgers (13) z. B. mit Hilfe eines Druckmittelzylinders (nicht dargestellt) angeordnet. An der Unterseite des Bohrgetriebes (11) sind - beim Einschalten des Motors (10) von diesem angetrieben - im Ausführungsbeispiel fünf Bohrer (14) in einer Reihe hintereinander und in gleichen Abständen zueinander sowie oberhalb eines an dem Maschinengestell (12) abgestützten Maschinentisches (15) angeordnet. Das Bohrgetriebe (11) mit dem darauf aufgeflanschten Antriebsmotor (10) kann - wie erwähnt - mit den angetriebenen Bohrern (14) abgesenkt werden, so daß in ein auf dem Maschinentisch (15) aufliegendes Werkstück (16) fünf Bohrungen (17) in einer Reihe eingebracht werden.

Zur genauen Einstellung und Befestigung des Werkstückes (16) auf dem Maschinentisch (15) weist das Bohrwerk sowohl eine an beiden Außenseiten des Bohrgetriebes (11) (eingangsseitig, ausgangsseitig) an diesem angeordnete Arretiereinrichtung (18) sowie eine am Bohrwerksträger (13) oder am Maschinengestell (12) befestigte Niederhaltereinrichtung (19) auf. Die Niederhaltereinrichtung (19) kann - wie im Ausführungsbeispiel dargestellt und beschrieben - ein Druckmittelzylinder (20) sein, dessen senkrechte Kolbenstange (21) mit ihrem darunter befestigten Niederhalterfuß (22) nach unten ausfahrbar ist, so daß das Werkstück (16) von den beiden Niederhalterfüßen (22) auf den Maschinentisch (15) gedrückt wird. Die Niederhaltereinrichtungen (19) sind an senkrechten Schwenkachsen (23) gelagert, die am Maschinengestell (12) oder am Bohrwerksträger (13) befestigt sind. Daher lassen sich die Niederhaltereinrichtungen (19) in etwa in die Linie der Bohrer (14) und der Arretiereinrichtung (18) hineinschwenken bzw. aus diesem Bereich herausschwenken, wenn z. B. die Bohrer (14) gewechselt werden sollen.

Die Arretiereinrichtung (18) ist jeweils eingangsseitig und ausgangsseitig des Bohrgetriebes (11) in dessen - in Längsrichtung gesehen - Endbereich angeordnet, wobei eine Arretiereinrichtung (18) mit einer Einrichtung (24) zum Vorzentrieren und einer Einrichtung (25) zum Lage bestimmenden Zentrieren des Werkstücks (16) auf dem Maschinentisch (15) ausgestattet ist. Die Arretiereinrichtung (18) ist endseitig im Bohrgetriebeblock (26) integriert.

Die Einrichtung (24) (zum Vorzentrieren) der Arretiereinrichtung (18) hat einen im Querschnitt kreisförmigen Haltestab (27), der in einer Bohrung (28) im Endbereich des Bohrgetriebeblocks (26) gelagert ist. In dem zum Werkstück (16) zeigenden Endbereich des Haltestabes (27) ist eine Ausnehmung (29) eingearbeitet, die dabei zur Stirnfläche und zur äußeren Manteloberfläche des Haltestabes (27) hin offen ist und sich dabei in Stablängsrichtung erstreckt. Die Ausnehmung (29) ist quer zur Stablängsrichtung gesehen nicht durchgehend ausgebildet, so daß der Haltestab (27) in diesem Bereich, bedingt durch die Ausnehmung (29), keinen Schlitz aufweist. In der Ausnehmung (29) ist ein Schwenkkörper (30) mittels eines Lagerstiftes (31) schwenkbar gelagert, der quer zur Durchlaufrichtung des Werkstückes (16) und parallel zur Werkstückoberfläche des Haltestabes (27) und den Schwenkkörper (30) durchdringt. Der Schwenkkörper (30) weist einen an seiner Unterseite herausragenden Zentrierstift (32) auf, der eine gegenüber seiner Längsachse abgeschrägte Oberfläche (33) als Stirnseite hat. Auf das dem Schwenkkörper (30) entgegengesetzt gelegenen Ende des Haltestabes (27) ist ein Anschlagring (34) gesteckt, in den senkrecht zur Längsachse des Haltestabes (27) verlaufend - die Materialstärke des Anschlagringes (34) durchdringend - eine Schraube (35) eingesetzt ist. Die Schraube (35) greift in eine in den Haltestab (27) eingearbeitete, in deren Längsrichtung verlaufende Nut (36) ein und befestigt somit durch entsprechendes Anziehen den Anschlagring (34) mit dem Haltestab (27), wobei der Anschlagring (34) auf dem Bohrgetriebeblock (26) aufliegt; somit ist der den Schwenkkörper (30) aufnehmende Haltestab (27) in seiner Bohrung (28) gelagert. Durch Lösen der Schraube (35) kann der Anschlagring (34) gelöst werden, so daß der Haltestab (27) sowohl nach oben als auch nach unten in seiner Längsachse verschiebbar ist und somit der den Zentrierstift (32) aufnehmende Schwenkkörper (30) der Dicke eines zu bearbeitenden Werkstücks (16) stufenlos angepaßt werden kann. In der gewünschten, der Dicke des Werkstücks (16) angepaßten Stellung des Zentrierstiftes (32) wird durch Anziehen der Schraube (35) der Anschlagring (34) wieder mit dem Haltestab (27) befestigt, so daß der Anschlagring (34) auf dem Bohrgetriebeblock (26) aufliegt und der in der Ausnehmung (29) verschwenkbar gelagerte Schwenkkörper (30) mit seinem Zentrierstift (32) in seiner der Werkstückdicke angepaßten Position fixiert ist.

Nach der Beendigung eines Bohrvorganges und dem Anheben des Bohrgetriebes (11) mit seinen Bohrern (14) wird das Werkstück (16) oberhalb des Maschinentisches (15) entgegengesetzt der abgeschrägten Oberfläche (33) des Zentrierstiftes (32) (Pfeilrichtung 45) waagerecht weiterbewegt. Dabei gleitet der in einer Bohrung (17) befindliche Zentrierstift (32) mit seiner abgeschrägten Oberfläche (33) an der äußeren Bohrungskante entlang, während der Schwenkkörper (30) aus seiner senkrechten Lage um den als Schwenkachse ausgebildeten Lagerstift (31) herausgeschwenkt wird. Beim Weitertransport des Werkstückes (16) gleitet dessen Oberfläche unter dem Zentrierstift (32) und dem Schwenkkörper (30) entlang, bis der Zentrierstift (32) in die letzte Bohrung (17) einer zuvor gebohrten Bohrungsreihe einfaßt. Nun wird die Bewegung des Werkstücks (16) umgekehrt, wodurch der Schwenkkörper (30) wieder in seine senkrechte Lage zurückverschwenkt wird, bis er an einer in den Haltestab (27) geschraubten, in die Ausnehmung (29) vorstehenden Stellschraube (37) anschlägt. Eine weitere Rückwärtsbewegung des Werkstücks (16) ist nunmehr unmöglich, da der Zentrierstift (32) innerhalb der letzten Bohrung (17) einer zuvor gebohrten Bohrungsreihe das Werkstück (16) festhält.

Die Stellschraube (37) kann für zwei Zentriervariationen eingestellt werden:
Wenn die hohe Genauigkeit, die durch die Lage bestimmende, zusätzliche Zentriereinrichtung (25) erreicht werden kann, nicht erforderlich ist, wird bei in die letzte Bohrung (17) einer Bohrungsreihe einfassenden Zentrierstift (32) dessen senkrechte Lage dahingehend festgelegt, als daß die Stellschraube (37) so weit in die Ausnehmung (29) eingeschraubt wird, bis die Stirnfläche des Schraubenschaftes auf der ihr zugewandten Oberflächenseite des Schwenkkörpers (30) anliegt. Somit ist bei weiteren Verschiebebewegungen des Werkstücks (16) - jeweils nach dem Bohren einer Lochreihe - die senkrechte Lage des Zentrierstiftes (32) durch erfolgtes Zurückschwenken - kurzes Verschieben des Werkstücks (16) entgegengesetzt der Durchlaufrichtung - des Schwenkkörpers (30) vorgegeben und damit auch immer der gleiche Mittenabstand zwischen jeweils der letzten Bohrung (17) einer Bohrungsreihe und der ersten Bohrung (17) einer darauf-folgenden Bohrungsreihe.

Ist jedoch eine hohe Maßgenauigkeit der erwähnten Mittenabstände entsprechender Bohrungen (17) erforderlich (z. B. bei sehr langen "Lochreihen"), muß die Lage des Werkstücks (16) noch besser zentriert werden. Hierzu wird die außenseitige Zentriereinrichtung (25) aktiviert:
Der Durchmesser des Zentrierstiftes (32) ist immer etwas kleiner als der Durchmesser der Bohrung (17), damit beim Verschieben des Werkstücks (16) dieser sich aus seiner Bohrung (17) herausbewegen (herausschwenken) kann. Außerdem kann, wenn nach entsprechender Vorschubbewegung des Werkstücks (16) der Zentrierstift (32) in die letzte Bohrung (17) einer zuvor gebohrten Bohrungsreihe eingefaßt hat, die darauffolgende, entgegengesetzte Bewegung des Werkstücks (16) zum Zurückverschwenken des Schwenkkörpers (30) zu stark oder heftigist, die Bohrung (17) so an den Zentrierstift (32) gedrückt werden, daß die vorgenannte Bohrung (17) sich entsprechend weiten kann. Aus diesen Gründen kann sich eine nicht gewünschte Maßungenauigkeit zwischen "entsprechenden Bohrung (17)" von aneinander angrenzenden Bohrungsreihen ergeben. In eine als Luftkammer ausgebildete Bohrung (40) wird Druckluft eingeleitet und eine Haltestange (38) führt einen Zentrierstift (39) in die vorletzte Bohrung (17) einer zuvor gebohrten Bohrungsreihe. Dabei kann aus oben erwähnten Gründen eine Koaxialität zwischen Zentrierstift (39) und entsprechender Bohrung (17) nicht gegeben sein. Durch eine entsprechende, z. B. konische Ausbildung des Zentrierstiftes (39) im Bereich seines freien Endes schiebt sich dieser jedoch so in die entsprechende Bohrung (17) hinein, daß je nach vorhandener Inkoaxialität eine minimale Verschiebung des Werkstücks (16) in Durchlaufrichtung stattfindet, wobei auch der Schwenkkörper (32) von der Stellschraube (37) weggezogen werden kann. In diesem Fall wird die Stellschraube (37) so verstellt, bis sie auf der ihr gegenüberliegenden Oberflächenseite des Schwenkkörpers (30) anliegt.

Die Zentriereinrichtung (25) hat eine im Querschnitt kreisförmige Haltestange (38), von deren stirnseitigem zum Werkstück (16) hingewandtem Ende her koaxial der im Querschnitt kreisförmige, zylindrische Zentrierstift (39) eingesetzt ist. Die Haltestange (38) ist in der Kammer (40) des Bohrgetriebeblocks (26) gelagert, wobei, wenn in die Kammer (40) ein Druckmittel z. B. Druckluft eingeleitet wird, die Haltestange (38) sich entgegengesetzt einer Federkraft nach unten bewegt (zum Werkstück hin) und somit den auf seiner gesamten Mantelfläche kreisförmig ausgebildeten Zentrierstift (39) in eine vorletzte Bohrung (17) einer zuvor gebohrten Bohrungsreihe führt. Ein zu bohrendes Werkstück (16) ist somit in seiner Bearbeitungslage genau zentriert (arretiert), so daß bei einer Anzahl von in einer Reihe liegenden Bohrungen (17) eine besonders hohe Maßgenauigkeit bezüglich der gleichen Achsabstände der Bohrungen (17) untereinander gegeben ist.

Auf die Haltestange (38) - diese radial umgebend - ist von ihrem dem Zentrierstift (39) entgegengesetzt gelegenem Ende her eine Rückholfeder (41) gesteckt, die sich bei nicht mit Druckluft beaufschlagter Haltestange (38) auf einem Teil ihrer Länge in einem Zwischenraum (42) befindet, der durch das Aufschrauben einer Kappe (43) auf das stirnseitige Ende der Welle (38) entstanden ist, deren Mantelfläche auf einem Teil ihrer Länge übergreift. Der Innendurchmesser der Kappe (43) ist größer als der Außendurchmesser der Haltestange (38) in diesem Bereich.

Wird in die Kammer (40) Druckluft eingeleitet, so bewegt sich dadurch die Haltestange (38) nach unten zum Werkstück (16) hin:
Der Zentrierstift (39) wird dabei in eine vorletzte Bohrung (17) einer zuvor gebohrten Bohrungsreihe geführt, wobei die auf das stirnseitige Ende der Haltestange (38) geschraubte Kappe (43) die Rückholfeder (41) so weit zusammendrückt, bis die zum Bohrgetriebeblock (26) zeigende Ringfläche der Kappe (43) auf diesem anliegt. In diesem zusammengedrückten Zustande der Rückholfeder (41) befindet sich diese vollständig in dem Zwischenraum (42). Das Werkstück (16) ist jetzt genau zentriert, so daß der Mittenabstand zwischen der letzten Bohrung (17) einer Bohrungsreihe und dem ersten Bohrer (14) der gleiche ist wie zwischen den Bohrungen (17) einer Bohrungsreihe untereinander. Erst nach den Zentrierung erfolgt über die Niederhaltereinrichtung (19) die Befestigung des Werkstücks (16) auf dem Maschinentisch (15). Gleichzeitig erfolgt die Abwärtsbewegung des Bohrgetriebes (11). Das Bohrgetriebe (11) gleitet an dem Haltestab (27) bzw. der Haltestange (38) der Zentriereinrichtungen (24, 25) geführt nach unten und bringt über die Bohrer (14) die nächste Bohrungsreihe in das Werkstück (16) ein. Nach erfolgtem Bohrvorgang wird die Kammer (40) entlüftet, wobei die Rückholfeder (41) sich einerseits auf dem Bohrgetriebeblock (26), andererseits auf der inneren Ringfläche der Kappe (43) abstützt und die Haltestange (38) nach oben drückt, wobei sich auch der Zentrierstift (39) aus der entsprechenden Bohrung (17) wieder entfernt.

Beim Aufwärtshub wird das Bohrgetriebe (11) durch die Welle (27) geführt. Die Zentriereinrichtung (24) bleibt durch ihr Eigengewicht unten.

Die Arretiervorrichtung (18) ist sowohl zur linken als auch zur rechten Seite des Bohrgetriebeblocks (26) in diesem angeordnet (in Verschieberichtung des Werkstücks gesehen), damit bei einem Werkstück (16) die im rechten Winkel zu einer Reihe von Bohrungen (17) stehende Stirnseite (44) des Werkstücks (16) auch beim Einbringen der zweiten Reihe von Bohrungen (17), die der ersten Reihe von Bohrungen gegenüberliegt, als "Bezugskante" in Betracht kommt. Um ihrer Funktion - Zentrieren des Werkstücks (16) durch Einbringen des Zentrierstiftes (32) in eine entsprechende Bohrung (17) - gerecht zu werden, muß die abgeschrägte Oberfläche (33) des Zentrierstiftes (32) entgegengesetzt der Vorschubbewegung des Werkstücks (16) angeordnet sein, wobei die Verschwenkbewegung des Schwenkkörpers (30) in Richtung der Vorschubbewegung des Werkstücks (16) erfolgt; dabei ist ein Zurückschieben des Werkstücks (16) in entgegengesetzter Richtung nicht möglich.

Bei zwei sich in einem Abstand gegenüberliegenden Bohrungsreihen liegen sich dabei zwei Bohrungen (17) immer so gegenüber, daß ihre im rechten Winkel zur Vorschubbewegung des Werkstücks (16) verlaufenden Achsen genau miteinander fluchten.

Durch die Anordnung von zwei Arretiervorrichtungen (18) unter der Verwendung einer als "Bezugskante" wirkenden Stirnseite (44) des Werkstücks (16) wird somit bezüglich der miteinander fluchtenden Achsen der Bohrungen (17) eine sehr hohe Maßgenauigkeit erreicht.

Der Arbeitsablauf beim Einbringen von sich gegenüberliegenden Bohrungsreihen (17) in ein Werkstück (16) wird wie folgt beschrieben:
Ein zu bearbeitendes Werkstück (16) wird zunächst an einen Anschlag gelegt (nicht dargestellt) und je nach Getriebegröße werden zunächst zwei Bohrungen (17) oder mehrere Bohrungen (17) in Vorschubbewegung des Werkstücks (16) gesehen hintereinander in einem Abstand zueinander eingebracht. Das Werkstück (16) wird entlang einer Anschlagkante (nicht dargestellt) des Maschinentisches (15) in Pfeilrichtung (45) entlangbewegt, bis der Zentrierstift (32) in der letzten der beiden Bohrungen (17)(entgegengesetzt der Vorschubbewegung des Werkstückes (16) gesehen) eingerastet ist. Die Haltestange (38) wird mit Druckluft beaufschlagt, so daß sie sich nach unten bewegt und den Zentrierstift (39) in die erste Bohrung (17) führt. Gleichzeitig werden die Niederhalterfüße (22) der Niederhaltereinrichtungen (19) ausgefahren, um das Werkstück (16) auf dem Maschinentisch (15) festzuspannen und der Druckmittelzylinder (nicht dargestellt) verfährt das gesamte Bohrgetriebe (11) mit den sich drehenden Bohrern (14) nach unten (zum Werkstück (16) hin), um in diesem eine Reihe von Bohrungen (17) einzubringen. Der Achsabstand der Zentriereinrichtungen (24, 25) ist dabei genauso groß wie der Achsabstand der Einrichtung (24) zum ersten Bohrer (14) hin bzw. genauso groß wie der Achsabstand der Bohrer (14) untereinander.

Um eine weitere Reihe von Bohrungen (17) u.s.w. in das Werkstück (16) einbringen zu können, fährt das Bohrgetriebe (11) wieder nach oben, die als Luftkammer ausgebildete Bohrung (40) wird entlüftet, wobei die Haltestange (38) durch Federkraft nach oben gedrückt wird und der Zentrierstift (39) seine entsprechende Bohrung (17) wieder verläßt. Beim Hochfahren des Bohrgetriebes bleibt der Haltestab (27) bedingt durch sein Eigengewicht unten. Die Niederhalterfüße (22) der Niederhaltereinrichtung (19) bewegen sich aufwärts und das Werkstück (16) kann weiter in Pfeilrichtung (45) verschoben werden, bis der Zentrierstift (32) in der letzten Bohrung (17) dieser in das Werkstück (16) eingebrachten Bohrungsreihe einrastet.

Der weitere Verlauf entspricht dem zuvor beschriebenen Ablauf.

Ist die Bohrungsreihe vollständig im Werkstück (16) eingebracht, wird das Werkstück um 180° gedreht und in Pfeilrichtung (46) bewegt.

Der Arbeitsablauf zum Einbringen der zweiten Bohrungsreihe entspricht dem beim Einbringen der ersten Bohrungsreihe.

Bei der Vorschubbewegung des Werkstücks (16) in Pfeilrichtung (45) ist die rechtsseitige Zentriereinrichtung (25) drucklos und somit in Ruhestellung. Die rechtsseitige Vorzentriereinrichtung (24) ist nach oben vom Werkstück (16) weggeschoben und in dieser Ruhelage lösbar befestigt. Bei Vorschubbewegung des Werkstücks (16) in Pfeilrichtung (46) stehen die ausgangsseitigen Zentriereinrichtungen (24, 25) in der wie zuvor bei den eingangsseitigen Zentriereinrichtungen (24, 25) beschriebenen Ruhestellung und die rechtsseitigen Zentriereinrichtungen (24, 25) stehen entsprechend in Arbeitsposition.

Ein wesentlicher Vorteil liegt darin, daß die Bedienungsperson bei der Durchschubbewegung immer beide Hände zum Weiterschieben und Halten des Werkstücks einsetzen kann. Es werden keine zusätzlichen Handgriffe zum Arretieren notwendig. (Weder beim Vor- noch beim Nachzentrieren).

## Patentansprüche

1. Bohrwerk mit mehreren oberhalb eines Maschinentisches (15) in einer Ebene in gerader Reihe in Abständen hintereinander angeordneten, zueinander parallelen Bohrern (14), mit einer an dem Bohrwerk gelagerten, zumindest einen einen Zentrierstift (32) haltenden Schwenkkörper (30) aufweisenden Arretiereinrichtung (18) für ein zu bohrendes Werkstück (16), dadurch gekennzeichnet, daß die Arretiereinrichtung (18) eine Einrichtung (24) zum Vorzentrieren und eine nachfolgende Einrichtung (25) zum Zentrieren umfaßt, welche in eine starre, mit den Bohrern (14) verbundene Baueinheit eingebaut sind, daß die Vorzentriereinrichtung (24) mit dem den Zentrierstift (32) haltenden Schwenkkörper (30) ausgestattet ist, daß die Zentriereinrichtung (25) mit einer einen Zentrierstift (39) fest aufnehmenden Haltestange (38) versehen ist, die in ihrer Längsrichtung in der Baueinheit verschiebbar gelagert ist, wobei die Zentrierstifte (32, 39) in ihrem Achsabstand passend zum Achsabstand der Bohrer (14) ausgerichtet sind, daß die Vorzentriereinrichtung (24) und die Zentriereinrichtung (25) in einem Bohrgetriebeblock (26) integriert sind, und daß beidseitig an der Baueinheit jeweils eine Vorzentriereinrichtung (24) und eine Zentriereinrichtung (25) angeordnet sind, zwischen denen die Bohrer (14) angebracht sind.

2. Bohrwerk nach Anspruch 1, dadurch gekennzeichnet, daß der Schwenkkörper (30) in einem in seiner Längsrichtung bewegbaren Haltestab (27) gelagert ist.

3. Bohrwerk nach Anspruch 2, dadurch gekennzeichnet, daß in dem Haltestab (27) eine die Lage des Schwenkkörpers (30) bestimmende Stellschraube (37) drehbar gelagert ist.

4. Bohrwerk nach einem der Ansprüche 1 bis 3, dadurch gekennzeichnet, daß die Haltestange (38) in einer an eine Druckluftleitung angeschlossenen Kammer (40) des Bohrgetriebeblocks (26) verschiebbar gelagert ist.

5. Bohrwerk nach Anspruch 4, dadurch gekennzeichnet, daß die Haltestange (38) unter der Einwirkung einer Rückholfeder (41) steht, welche die Haltestange (38) endseitig umgibt und als Druckfeder ausgebildet ist.

6. Bohrwerk nach einem der Ansprüche 1 bis 5, dadurch gekennzeichnet, daß der Durchmesser des Zentrierstiftes (32) kleiner ist, als eine in das Werkstück (16) eingebrachte Bohrung (17).

7. Bohrwerk nach einem der Ansprüche 1 bis 6, dadurch gekennzeichnet, daß der Zentrierstift (39) dem Durchmesser einer in das Werkstück (16) eingebrachten Bohrung (17) entspricht.

8. Bohrwerk nach einem der Ansprüche 1 bis 7, dadurch gekennzeichnet, daß der Bohrgetriebeblock (26) in der Höhe verstellbar im Maschinengestell (12) gelagert ist.

9. Bohrwerk nach einem der Ansprüche 1 bis 8, dadurch gekennzeichnet, daß Bohrvorgänge auch nur unter Verwendung der Vorzentriereinrichtung (24) durchführbar sind.

## Claims

1. A drilling machine having several mutually parallel drills (14) which are disposed above a supporting table (15) in a plane in a straight row one behind the other, having a locking device (18) for a workpiece to be drilled (16) which is mounted on the drilling machine and comprises at least one swivelling member (30) holding a centring pin (32),
**characterised in that** the locking device (18) comprises a device (24) for pre-centring and a following device (25) for centring, which are installed in a rigid structural unit connected to the drills (14),
**in that** the pre-centring device (24) is equipped with the swivelling member (30) retaining the centring pin (32),
**in that** the centring device (25) is provided with a retaining bar (38) securely housing a centring pin (39), which is displaceably mounted in its longitudinal direction in the structural unit, with the axial spacing of the centring pins (32, 39) being adapted to the axial spacing of the drills (14),
**in that** the pre-centring device (24) and the centring device (25) are integrated in a drilling gear unit (26),
**and in that** a pre-centring device (24) and a centring device (25), between which the drills (14) are mounted, are disposed on either side at the structural unit.

2. A drilling machine according to Claim 1,
**characterised in that** the swivelling member (30) is mounted in a retaining rod (27) which can move in its longitudinal direction.

3. A drilling machine according to Claim 2,
**characterised in that** an adjusting screw (37) determining the position of the swivelling member (30) is rotatably mounted in the retaining rod (27).

4. A drilling machine according to one of Claims 1 to 3,
**characterised in that** the retaining bar (38) is displaceably mounted in a chamber (40) of the drilling gear unit (26) connected to a compressed air line.

5. A drilling machine according to Claim 4,
**characterised in that** the retaining bar (38) is subject to the action of a restoring spring (41), which surrounds the retaining bar (38) at the end and is constructed as a compression spring.

6. A drilling machine according to one of Claims 1 to 5,
**characterised in that** the diameter of the centring pin (32) is smaller than a bore (17) provided in the workpiece (16).

7. A drilling machine according to one of Claims 1 to 6,
**characterised in that** the centring pin (39) corresponds to the diameter of a bore (17) provided in the workpiece (16).

8. A drilling machine according to one of Claims 1 to 7,
**characterised in that** the drilling gear unit (26) is mounted in a vertically adjustable manner in the machine frame (12).

9. A drilling machine according to one of Claims 1 to 8,
**characterised in that** drilling operations can only be performed with the use of the pre-centring device (24).

## Revendications

1. Machine à percer comprenant plusieurs forets (14) parallèles entre eux, disposés au-dessus d'une table de machine (15) dans un même plan, en ligne droite et à distance les uns derrière les autres, et un dispositif d'arrêt (18) destiné à une pièce à percer (16), monté sur la machine à percer et pourvu d'au moins un corps basculant (30) muni d'une broche de centrage (32), caractérisée en ce que le dispositif d'arrêt (18) comprend un dispositif de précentrage (24) suivi d'un dispositif de centrage (25), qui sont réunis sous la forme d'une unité de construction rigide reliée aux forets (14), en ce que le dispositif de précentrage (24) est pourvu du corps basculant (30) muni de la broche de centrage (32), en ce que le dispositif de centrage (25) est pourvu d'une barre de maintien (38) à laquelle est solidarisée une broche de centrage (39) et qui est montée avec une possibilité de déplacement dans son sens longitudinal à l'intérieur de l'unité de construction, l'entre-axe des broches de centrage (32, 39) étant adapté à celui des forets (14), en ce que le dispositif de précentrage (24) et le dispositif de centrage (25) sont intégrés à un bloc de commande de perçage (26), et en ce que de part et d'autre de l'unité de construction sont disposés un dispositif de précentrage (24) et un dispositif de centrage (25), entre lesquels sont montés les forets (14).

2. Machine à percer selon la revendication 1, caractérisée en ce que le corps basculant (30) est monté dans une barre de retenue (27) pouvant se déplacer dans son sens longitudinal.

3. Machine à percer selon la revendication 2, caractérisée en ce qu'une vis de réglage (37) déterminant la position du corps basculant (30) est montée, avec possibilité de rotation, dans la barre de retenue (27).

4. Machine à percer selon l'une des revendications 1 à 3, caractérisée en ce que la barre de maintien (38) est montée coulissante dans une chambre (40) du bloc de commande de perçage (26), ladite chambre (40) étant raccordée à une conduite d'air comprimé.

5. Machine à percer selon la revendication 4, caractérisée en ce que la barre de maintien (38) est soumise à l'action d'un ressort de rappel (41) qui entoure l'une de ses extrémités et qui est conçu sous la forme d'un ressort de pression.

6. Machine à percer selon l'une des revendications 1 à 5, caractérisée en ce que le diamètre de la broche de centrage (32) est inférieur à celui d'un trou (17) pratiqué dans la pièce (16).

7. Machine à percer selon l'une des revendications 1 à 6, caractérisée en ce que la broche de centrage (39) présente un diamètre correspondant à celui d'un trou (17) pratiqué dans la pièce (16).

8. Machine à percer selon l'une des revendications 1 à 7, caractérisée en ce que le bloc de commande de perçage (26) est monté dans le bâti (12) de la machine avec une possibilité de réglage en hauteur.

9. Machine à percer selon l'une des revendications 1 à 8, caractérisée en ce que les opérations de perçage peuvent également être réalisées en n'utilisant que le dispositif de précentrage (24).
